(19) Europäisches Patentamt
European Patent Office
Office européen des brevets

(11) **EP 4 671 402 A1**

(12) **EUROPEAN PATENT APPLICATION**
published in accordance with Art. 153(4) EPC

(43) Date of publication:
**31.12.2025  Bulletin 2026/01**

(21) Application number: **24927675.9**

(22) Date of filing: **09.09.2024**

(51) International Patent Classification (IPC):
*C22C 38/00* (2006.01)  *B22D 11/00* (2006.01)
*C21D 8/06* (2006.01)  *C21D 9/00* (2006.01)
*C22C 38/58* (2006.01)  *C22C 38/60* (2006.01)

(52) Cooperative Patent Classification (CPC):
B22D 11/00; C21D 8/06; C21D 9/00; C22C 38/00;
C22C 38/58; C22C 38/60

(86) International application number:
**PCT/JP2024/032281**

(87) International publication number:
**WO 2025/191888 (18.09.2025 Gazette 2025/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  **13.03.2024   JP 2024038677**

(71) Applicant: NIPPON STEEL CORPORATION
Chiyoda-ku
Tokyo 100-8071 (JP)

(72) Inventors:
• **TAKANO, Kohji**
  **Tokyo 100-0005 (JP)**
• **YAMASAKI, Shota**
  **Tokyo 100-0005 (JP)**
• **TOHJOH, Masayuki**
  **Tokyo 100-0005 (JP)**

(74) Representative: **Vossius & Partner**
**Patentanwälte Rechtsanwälte mbB**
**Siebertstrasse 3**
**81675 München (DE)**

(54) **STAINLESS STEEL WIRE ROD OR STEEL WIRE FOR STAINLESS STEEL COMPONENT HAVING HIGH HARDNESS AND HIGH CORROSION RESISTANCE, METHOD FOR PRODUCING SAME, AND DRILLING TAPPING SCREW**

(57)    A stainless steel wire rod or steel wire includes C: from 0.10 to 0.30%; Si: from 0.10 to 2.0%; Mn: from 0.10 to 3.0%; P: 0.05% or less; S: 0.010% or less; Cr: from 12.0 to 16.0%; Mo: from 1.0 to 3.0%; N: from 0.010 to 0.15%; and one or more of Nb: 0.30% or less, V: 0.30% or less, Ti: 0.30% or less, and Ta: 0.30% or less in an amount of Nb+V+Ti+Ta being in a range from 0.03 to 0.30%, in which the stainless steel wire rod or steel wire has a composition adjusted so that a DI value is 0% or less and PREN index is 18.0% or more, and a mass ratio of (maximum segregation amount/average composition) of Mo in a central portion of a transverse cross section of the stainless steel wire rod or steel wire is 2.0 or less.

FIG. 1

EP 4 671 402 A1

**Description**

TECHNICAL FIELD

The present invention relates to a stainless steel wire rod or steel wire, a manufacturing method thereof, and a self-drilling tapping screw. The stainless steel wire rod or steel wire is a raw material for a high-hardness, highly corrosion-resistant stainless steel component, such as a screw, requiring corrosion resistance. In particular, the invention is directed to a martensitic stainless steel.

BACKGROUND ART

High corrosion resistance has been highly demanded for high-hardness forged components, such as self-drilling tapping screws, in fields of construction materials and automotive components. There has been proposed an application of high-hardness, highly corrosion-resistant martensitic stainless steel, a composition of which is adjusted, for instance, by adding with Mo and the like so as to regulate a $\delta$ ferrite amount (Patent Literature 1).

Further, there has also been proposed a high-toughness, high-hardness, highly corrosion-resistant martensitic stainless steel in which a $\delta$ ferrite amount in a central portion is reduced to less than 10% and a residual austenite phase is retained in a surface layer (Patent Literature 2).

However, when these steels are processed as a raw material into self-drilling tapping screws and the like, and then quenched, or quenched and tempered, to manufacture final products, rust may form on a surface of a central portion of a screw head in the final product. Rusting at this portion is caused by intermetallic compounds and the like in a positive Mo segregation region in the central portion of the raw material. Specifically, if an excessive positive Mo segregation region in the central portion of the raw material appears on a surface of the final product, such as the central portion of the head of the self-drilling tapping screw, corrosion resistance in this portion is significantly deteriorated.

On the other hand, as a method of improving positive segregation of the central portion of the raw material, it has been proposed to apply reduction during the continuous casting of billets of 13% Cr stainless steel (Patent Literature 3). However, not only a large scale modification of continuous casting equipment is required, but also effects of improving the positive segregation of Mo easily segregated is unclear.

CITATION LIST

PATENT LITERATURE(S)

    Patent Literature 1: JP Patent No. 3340225
    Patent Literature 2: JP Patent No. 4252145
    Patent Literature 3: JP H4-305350 A

SUMMARY OF THE INVENTION

PROBLEM(S) TO BE SOLVED BY THE INVENTION

The problem to be solved by the invention is to inexpensively improve corrosion resistance of a portion corresponding to a central portion of a stainless steel wire rod or steel wire that is a raw material for a high-hardness, highly corrosion-resistant stainless steel component. Accordingly, an object of the invention is to provide a stainless steel wire rod or steel wire, in which Mo segregation, which serves as a start point for rusting in the central portion of the raw material, and microstructure are improved, a manufacturing method thereof, and a self-drilling tapping screw. In particular, the invention is directed to a martensitic stainless steel.

MEANS FOR SOLVING THE PROBLEM(S)

As a result of various studies to solve the above problem, the inventors have arrived at the following invention. First, a composition of a raw material exhibiting high hardness and high corrosion resistance is adjusted so as to suppress formation of $\delta$ ferrite. Subsequently, Nb, V, Ti, and Ta, which are effective in suppressing sensitization, are added in appropriate amounts. In order to eliminate the need for large-scale reduction equipment during casting, small cross-section casting with rapid solidification is adopted, along with hot working with a high reduction of area. The wire rod or steel wire is thus manufactured. This makes it possible to control the mass ratio (maximum segregation amount/average composition) based on the maximum positive segregation amount of Mo in the central portion of the wire rod and steel wire to 2.0 or less. As a result, it was found that corrosion resistance could be greatly improved by suppressing the formation of Mo-based intermetallic compounds and the like in the central portion of the final product during subsequent quenching or quenching and tempering. The invention is made based on the above finding. The gist of the invention is as follows.

[1] A stainless steel wire rod or steel wire includes: by mass%, C: from 0.10 to 0.30%; Si: from 0.10 to 2.0%; Mn: from 0.10 to 3.0%; P: 0.05% or less; S: 0.010% or less; Cr: from 12.0 to 16.0%; Mo: from 1.0 to 3.0%; N: from 0.010 to 0.15%; one or more of Nb: 0.30% or less, V: 0.30% or less, Ti: 0.30% or less, and Ta: 0.30% or less in an amount of Nb+V+Ti+Ta being in a range from 0.03 to 0.30%; and a balance consisting of Fe and impurities, in which

the stainless steel wire rod or steel wire has a composition adjusted so that a DI value represented by an equation (1) is 0% or less and PREN represented by an equation (2) is 18.0% or more, and
a mass ratio of (maximum segregation amount/average composition) of Mo in a central portion of a transverse cross section of the stainless steel wire rod or steel wire is 2.0 or less,

$$DI = Cr + 1.21Mo + 0.48Si + 2.48Al - (24.5C + 18.4N + Ni + 0.11Mn) - 10 \quad .... \text{ Equation (1)}$$

$$PREN = Cr + 3.3Mo + 16N \quad \cdot \cdot \cdot \text{ Equation (2)}$$

where in the equations (1) and (2), each of element symbols represents a content of a corresponding element by mass%.

[2] The stainless steel wire rod or steel wire according to [1], in which the stainless steel wire rod or steel wire includes, in place of a part of the Fe, one or both of a group (A) and a group (B) below,

the group (A):one or more of Ni: 2.0% or less, Cu: 2.0% or less, W: 3.0% or less, Co: 2.0% or less, B: 0.010% or less, Sn: 0.30% or less, Sb: 0.30% or less, and Al: 1.00% or less, and
the group (B): one or more of Ca: 0.006% or less, Mg: 0.006% or less, Hf: 0.010% or less, and REM: 0.06% or less.

[3] A manufacturing method of a stainless steel wire rod or steel wire according to [1] or [2] includes: casting a cast steel having the composition according to [1] or [2] with a small transverse cross-section area X (cm$^2$) of 80 to 350 cm$^2$ by indirect cooling in a mold, or by indirect cooling in the mold and rapid cooling of a surface layer of the cast steel by direct water cooling, and
subsequently, hot rolling the cast steel at a reduction of area equal to or more than Y (%) represented by an equation (3),

$$Y = 0.0025X + 98.75 \quad ..... \text{ Equation (3).}$$

[4] A self-drilling tapping screw exhibiting an excellent corrosion resistance in a central portion of a head, and manufactured using the stainless steel wire rod or steel wire according to [1] or [2] as a raw material.
[5] A manufacturing method of a self-drilling tapping screw exhibiting an excellent corrosion resistance in a central portion of a head, the method includes using the stainless steel wire rod or steel wire according to [1] or [2] as a raw material.

The stainless steel wire rod or steel wire of the invention has the adjusted composition and the reduced Mo segregation in the central portion. Therefore, the product, such as a self-drilling tapping screw, manufactured using the stainless steel wire rod or steel wire of the invention as a raw material has an effect of improving corrosion resistance of a high-hardness product whose central portion of the raw material is exposed on a surface by a processing and heating treatment.

BRIEF DESCRIPTION OF DRAWING(S)

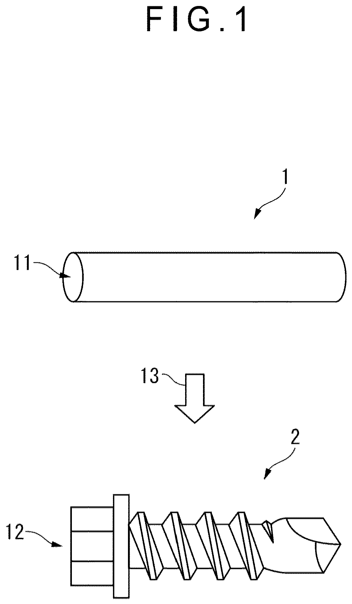

Fig. 1 illustrates a relationship between a positive Mo segregation region in a central portion of a steel wire rod or a steel wire and a rust formation site in a central portion of a screw head of a self-drilling tapping screw after a processing and heating treatment.

## DESCRIPTION OF EMBODIMENT(S)

The invention is directed to a stainless steel wire rod or steel wire. The wire rod refers to a linear material obtained by hot rolling of steel. The steel wire refers to a linear material obtained by further cold working of the wire rod. The wire rod or steel wire shall be collectively referred to as "linear steel material" herein.

Fig. 1 illustrates a relationship between a positive Mo segregation region 11 in a central portion of a steel wire rod or steel wire 1 and a rust formation site 12 in a central portion of a screw head of a self-drilling tapping screw 2 after a processing and heating treatment 13.

A chemical composition of a stainless steel wire rod or steel wire will be described. In the chemical composition of steel, "%" refers to mass%. A numerical range expressed using "to" means a range including numerical values written before and after "to" as the lower limit and the upper limit, respectively. Note that when the numerical values written before and after "to" are added with the term "exceeding" or "less than", the numerical range does not include these numerical values as the lower limit or the upper limit.

First, reasons for limiting the chemical composition and the like required for the stainless steel wire rod or steel wire of the invention are described below.

C is added at 0.10% or more together with N. This C content is required to obtain a hardness of Hv $\geq$ 500, which is required for a high-hardness product to exhibit functions, such as screwability of a self-drilling tapping screw as a final product. However, if the C content exceeds 0.30%, cold workability is deteriorated, toughness, such as head breakage resistance, of the final screw product is deteriorated, and corrosion resistance is deteriorated. Accordingly, the upper limit of the C content is defined as 0.30%. The C content is preferably from 0.15% to 0.25%.

Si is added in the amount of 0.10% or more so as to reduce coarse inclusions as a deoxidant and ensure cold workability and toughness, such as head breakage resistance, of the final screw product. However, excessive addition of Si in the amount exceeding 2.0% conversely deteriorates cold workability and toughness, and therefore, the upper limit of a Si content is limited to 2.0%. The Si content is preferably 1.0% or less.

Mn is added in the amount of 0.10% or more so as to reduce coarse inclusions as a deoxidant and ensure toughness, such as head breakage resistance, of the final screw product, and to ensure hot workability by forming MnS and fixing S. However, excessive addition of Mn in the amount exceeding 3.0% deteriorates cold workability for screw and the like, and therefore, the upper limit of an Mn content is limited to 3.0%. The Mn content is preferably 2.0% or less.

A P content is limited to 0.05% or less so as to ensure toughness, such as head breakage resistance, of the final screw product. The P content is preferably 0.035% or less.

An S content is limited to 0.010% or less so as to ensure cold workability and ensure toughness, such as head breakage resistance, of the final screw product. The S content is preferably 0.005% or less.

Cr is added in the amount of 12.0% or more so as to ensure corrosion resistance of the final screw product. However, the addition of Cr in the amount exceeding 16.0% not only deteriorates corrosion resistance by generating $\delta$ ferrite in the final product, but also deteriorates screwability since hardness of the final product cannot satisfy Hv $\geq$ 500. Therefore, the upper limit of a Cr content is limited to 16.0%. The Cr content is preferably from 12.5% to 15.0%.

Mo is added in the amount of 1.0% or more so as to ensure corrosion resistance of the final screw product. However, when Mo is added in the amount exceeding 3.0%, Mo excessively segregates positively in the central portion of the wire rod or steel wire, even if small cross-section casting and hot rolling with a high reduction of area are employed. As a result, intermetallic compounds and the like are formed, leading to deterioration in corrosion resistance in the central portion and toughness of the screw product. Therefore, the upper limit of an Mo content is defined as 3.0%. The Mo content is preferably from 1.3% to 2.5%.

N is added at 0.010% or more together with C. This N content is required to ensure the corrosion resistance of the final product such as a screw and to obtain a hardness of Hv $\geq$ 500, which is required for a high-hardness product to exhibit functions, such as screwability of a self-drilling tapping screw as the final product. However, if the N content exceeds 0.15%, in addition to deterioration of the toughness, such as head breakage resistance, of the final screw product, defects are generated by blow holes to deteriorate cold workability and corrosion resistance. Accordingly, the upper limit of the N content is defined as 0.15%. The N content is preferably from 0.05% to 0.13%.

Nb, V, Ti, and Ta are necessary to prevent sensitization by suppressing precipitation of Cr-based carbonitrides during heat treatment, thereby ensuring corrosion resistance of the final screw product. Therefore, one or two or more of Nb, V, Ti, and Ta are added so that the amount of (Nb+V+Ti+Ta) is 0.03% or more. However, if the amount of Nb, V, Ti, Ta, or (Nb+V+Ti+Ta) exceeds 0.30%, not only cold workability for screws and the like and the like deteriorate, but also toughness such as head breakage resistance of the screws deteriorates. Therefore, the upper limit of each of Nb, V, Ti, and Ta is defined as 0.30%. The amount of (Nb+V+Ti+Ta) is preferably from 0.05% to 0.25%.

The stainless steel wire rod or steel wire of the invention contains the above-mentioned essential components and the balance consists of Fe and impurities. In place of a part of Fe, the following component(s) may be contained.

Ni and Co are added as needed in order to improve toughness such as head breakage resistance of the final screw product. However, excessive addition of Ni and Co in the amounts each exceeding 2.0% deteriorates cold workability for screws and the like, and therefore, the upper limit of each content of Ni and Co is limited to 2.0%. Each content of Ni and Co is preferably 1.5% or less.

Cu, W, Sn, Sb, and Al are added as needed in order to improve corrosion resistance and the like of the final screw product. However, excessive addition in the amounts each exceeding Cu: 2.0%, W: 3.0%, Sn: 0.30%, Sb: 0.30%, and Al: 1.00% deteriorates cold workability for screws and the like and toughness of the final screw product, and therefore, the upper limits are limited to Cu: 2.0%, W: 3.0%, Sn: 0.30%, Sb: 0.30%, and Al: 1.00%, respectively. The contents of Cu: 1.0% or less, W: 2.0% or less, Sn: 0.10% or less, Sb: 0.20% or less, and Al: 0.10% or less are preferable.

B is added as needed in order to improve toughness such as head breakage resistance of the final screw product. However, excessive addition of B exceeding 0.010% conversely deteriorates toughness due to formation of borides. Therefore, the upper limit of the B content is limited to 0.010%. The B content is preferably 0.006% or less.

Ca, Mg, Hf, and REM are added as needed in order to improve hot workability. However, addition in amounts each exceeding Ca: 0.006%, Mg: 0.006%, Hf: 0.010%, and REM: 0.06% causes coarse inclusions, thereby deteriorating cold workability for screws and the like and toughness of the final screw product. Therefore, the upper limits are limited to Ca: 0.01%, Mg: 0.01%, Hf: 0.010%, and REM: 0.06%, respectively. The contents of Ca: 0.004% or less, Mg: 0.004% or less, Hf: 0.004% or less, and REM: 0.03% or less are preferable.

Examples of typical impurities contained in the stainless steel of the invention include Zn, Bi, Pb, Ge, Se, Ag, Se, and Te, which are usually mixed in at about 0.1% as impurities in the steel manufacturing process. An oxygen amount of the stainless steel of the invention is in a typical range from 0.001 to 0.02%.

An equation (1) of the DI was obtained as a result of an investigation of effects of various elements on the amount of $\delta$-ferrite in the base metal, and shows the elements that are effective in suppressing the amount of $\delta$-ferrite and the degree of influences by the elements. Cr, Mo, Si, Al, C, N, Ni, and Mn have influences. If the value of DI exceeds 0 (%), $\delta$-ferrite is clearly present and carbonitrides precipitate at the $\delta$-ferrite interface during quenching, resulting in a significant deterioration in corrosion resistance of the entire product, and therefore, the value of DI is limited to 0 (%) or less. The value of DI is preferably -0.5 (%) or less.

An equation (2) of PREN was obtained as a result of an investigation of effects of various elements on corrosion resistance of the base metal, and shows the elements that are effective in improving corrosion resistance and the degree of influence by the elements. Cr, Mo, and N have influences. The screw product rusts when a value of PREN is less than 18.0 (%). Therefore, the upper limit of the value of PREN is limited to 18.0 (%) or more. The value of PREN is preferably 18.5 (%) or more.

If the mass ratio of (maximum segregation amount/average composition) of Mo exceeds 2.0 for the maximum positive segregation amount of Mo in the central portion in the transverse cross section of the wire rod or steel wire containing Mo from 1.0 to 3.0%, influences such as formation of intermetallic compounds are exerted, so that rusting occurs on a surface of a central portion of a head of the final screw product. Therefore, the maximum segregation amount of Mo in the central portion of the transverse cross section of the wire rod or steel wire, which is a raw material for screws, is limited so that the mass ratio of (maximum segregation amount/average composition) of Mo is 2.0 or less. The mass ratio is preferably 1.5 or less. Cold forging is often employed as a processing method for screw products, in which case the metal flow of the process varies at random, making it impossible to accurately identify an occurrence site of positive segregation of Mo in the product. Therefore, it is important to control the segregation value in the central portion of the transverse cross section of the wire rod or steel wire, which is the raw material with a cross-sectional shape being approximately circularly symmetrical.

Next, a manufacturing method of a stainless steel wire rod or steel wire of the invention will be described.

In order to suppress positive Mo segregation in the central portion of the wire rod or steel wire, it is important to reduce segregation at a stage of the raw material such as cast steel and billets before wire rod rolling, and then perform hot rolling with a high processing rate. In particular, it is effective to control a relationship between a size of cast steel and a reduction of area during hot rolling.

The size of the cast steel during casting and indirect water cooling and direct water cooling of a surface layer of the cast steel during casting affect the degree of macro-segregation of Mo in the central portion of the cast steel during solidification, i.e., a segregation ratio. When indirect water cooling is used for the surface layer of the cast steel, if the transverse cross-section area of the cast steel exceeds 350 cm$^2$, the central portion will cool slowly with a solidification cooling rate of less than 0.2 degrees C/s. As a result, the amount of macro-segregation of Mo becomes large, and the mass ratio of the (maximum segregation/average composition) of the maximum Mo segregation region in the central portion of the wire rod exceeds 2.0, even if a hot rolling process with a high processing rate is employed in subsequent hot rolling. On the other hand, when the transverse cross section of the cast steel is less than 80 cm$^2$, the processing rate of the wire rod in hot rolling becomes small, and conversely, diffusion and homogenization of Mo does not progress and the mass ratio of the (maximum segregation amount/average composition) of the maximum positive Mo segregation region in the central portion of the wire rod or steel wire exceeds 2.0. Therefore, a small transverse cross-section area of 80 to 350 cm$^2$, in

combination with the indirect water cooling of the cast steel surface layer, is preferable for the cast steel. The small cross-section area is more preferably from 100 to 300 cm$^2$.

The indirect water cooling and direct water cooling during casting accelerates the cooling rate in the central portion of the cast steel, where the cooling rate is particularly small, and reduces the concentration of the solute elements in the central portion by compressive stress from the solidified outer shell, thereby contributing to the suppression of Mo centerline segregation in the cast steel in the cross-section area ranging from 80 to 350 cm$^2$. Therefore, it is effective to perform indirect water cooling or indirect water cooling and subsequent water cooling (direct water cooling) during casting in the invention.

**In** the actual casting process, for instance, indirect water cooling of molten steel by water cooling of a mold during continuous casting, and direct water cooling of a surface layer of cast steel pulled from the mold immediately after surface solidification fall within the scope of the invention.

On the other hand, it is necessary to hot-roll the cast steel with a reduction of area equal to or more than Y (%), which is expressed by an equation (3) according to the cast steel size (transverse cross-section area X (cm$^2$)). This allows the Mo segregation that occurs in the central portion of the cast steel during solidification to be reduced by hot rolling. When the reduction of area is smaller than Y(%), large Mo segregation remains and the mass ratio of (maximum segregation amount/average composition) of the maximum Mo segregation region in the central portion of the wire rod exceeds 2.0. A large reduction of area equal to or more than Y+0.25 (%) is more preferable.

$$Y = 0.0025X + 98.75 \;\; ..... \text{ Equation (3)}$$

The reduction in cross-section area during hot working may be carried out in two or more stages, such as hot forging, billet rolling, or wire rod rolling. Heating during the hot working of the raw material is preferably from 1,050 to 1,300 degrees C.

Next, the reason for the exemplary embodiment of the invention to be limited to a self-drilling tapping screw will be described below. In the self-drilling tapping screw of the exemplary embodiment of the invention manufactured from a wire rod or steel wire with suppressed positive Mo segregation in the central portion of the raw material, as described above, rust to be caused by excessive positive Mo segregation or the like does not occur in the central portion of the screw head in the central portion of the wire rod or steel wire, and therefore, the self-drilling tapping screw as a whole exhibits excellent corrosion resistance. Accordingly, the stainless steel wire rod or steel wire of the exemplary embodiment of the invention is limited to use as the raw material for a self-drilling tapping screw. A self-drilling tapping screw exhibiting an excellent corrosion resistance in the central portion of the head can be manufactured by using a manufacturing method of the self-drilling tapping screw using the stainless steel wire rod or steel wire of the invention as a raw material.

The invention described above allows for an improvement in corrosion resistance of a portion corresponding to the central portion of the raw material for the high-hardness, highly corrosion-resistant stainless steel component. In particular, the invention is directed to a martensitic stainless steel.

Examples

Example 1

Steels with chemical compositions shown in Tables 1 to 3 were melted at about 1,600 degrees C in a 150-kg vacuum melting furnace. Subsequently, the steels were casted into a magnesia-based mold of indirect water-cooling type with a water-cooling tube around an outer periphery of the mold and a transverse cross-section area X of 200 cm$^2$. Y obtained according to the equation (3) in this condition was 99.3 (%).

After casting was completed in the mold, the cast steels were heated to 1,150 degrees C, hot rolled to achieve a reduction of area of 99.8 (%) (equal to or more than Y (%)) by hot wire rod rolling, and then air cooled to room temperature to manufacture wire rods each with a 6.0-mm diameter. The wire rods were then fully annealed at 880 degrees C, pickled, cold drawn, BA (bright annealed) at 800 degrees C, oxalic acid coated, and skin-pass drawn to make steel wires each with a 5.2-mm diameter for cold heading.

Table 1

| Section | Steel | Chemical Composition (mass%) | | | | | | | | | | | | | | | Nb+V+Ti+Ta | DI | PREN |
|---|---|---|---|---|---|---|---|---|---|---|---|---|---|---|---|---|---|---|---|
| | | C | Si | Mn | P | S | Ni | Cr | Mo | N | Nb | V | Ti | Ta | Al | Others | | | |
| Inventive Steels | A | 0.20 | 0.3 | 0.3 | 0.02 | 0.002 | 0.1 | 13.0 | 2.1 | 0.07 | 0.05 | | | | | | 0.05 | -0.6 | 21.1 |
| | B | 0.11 | 0.2 | 0.2 | 0.01 | 0.003 | | 13.1 | 1.3 | 0.12 | 0.27 | | | | | | 0.27 | -0.2 | 19.3 |
| | C | 0.28 | 0.5 | 0.4 | 0.02 | 0.003 | | 13.1 | 1.7 | 0.06 | | 0.05 | | | | | 0.05 | -2.6 | 19.7 |
| | D | 0.21 | 1.8 | 0.4 | 0.03 | 0.004 | 0.2 | 12.9 | 1.6 | 0.08 | | 0.29 | | | | | 0.29 | -1.2 | 19.5 |
| | E | 0.18 | 0.6 | 2.7 | 0.03 | 0.003 | 0.1 | 13.3 | 1.5 | 0.09 | | | 0.03 | | | | 0.03 | -1.1 | 19.7 |
| | F | 0.19 | 0.5 | 0.3 | 0.04 | 0.003 | | 13.3 | 1.5 | 0.08 | | | 0.26 | | | | 0.26 | -0.8 | 19.5 |
| | G | 0.20 | 0.4 | 0.3 | 0.03 | 0.008 | | 12.8 | 1.4 | 0.08 | | | | 0.03 | | | 0.03 | -1.7 | 18.7 |
| | H | 0.18 | 0.4 | 0.3 | 0.02 | 0.002 | | 12.1 | 1.8 | 0.09 | | | | 0.27 | | | 0.27 | -1.6 | 19.5 |
| | I | 0.21 | 0.3 | 0.2 | 0.02 | 0.003 | | 15.7 | 1.0 | 0.12 | 0.06 | 0.12 | | | 0.01 | | 0.18 | -0.3 | 20.9 |
| | J | 0.22 | 0.4 | 0.4 | 0.02 | 0.003 | | 12.1 | 2.7 | 0.07 | 0.05 | 0.15 | | | | | 0.2 | -1.2 | 22.1 |
| | K | 0.22 | 0.4 | 0.3 | 0.02 | 0.002 | 0.1 | 13.5 | 1.3 | 0.02 | 0.05 | | | 0.05 | 0.01 | | 0.1 | -0.6 | 18.1 |
| | L | 0.19 | 0.4 | 0.3 | 0.03 | 0.003 | | 12.8 | 1.6 | 0.14 | | 0.10 | | 0.05 | | | 0.15 | -2.3 | 20.3 |
| | M | 0.20 | 0.4 | 0.2 | 0.03 | 0.003 | | 12.9 | 1.5 | 0.07 | | 0.10 | 0.01 | | | | 0.11 | -1.3 | 19.0 |
| | N | 0.21 | 0.5 | 0.3 | 0.02 | 0.002 | | 13.0 | 1.4 | 0.08 | 0.05 | 0.12 | | 0.10 | | | 0.27 | -1.7 | 18.9 |
| | O | 0.22 | 0.4 | 0.3 | 0.04 | 0.003 | 0.1 | 13.2 | 1.4 | 0.06 | 0.05 | 0.10 | | | | | 0.15 | -1.5 | 18.8 |
| | P | 0.21 | 0.4 | 0.4 | 0.02 | 0.002 | 1.1 | 13.2 | 1.5 | 0.08 | 0.10 | 0.10 | | | 0.01 | | 0.2 | -2.5 | 19.4 |
| | Q | 0.22 | 0.3 | 0.4 | 0.02 | 0.002 | 1.8 | 13.2 | 1.3 | 0.08 | 0.10 | | | 0.05 | | | 0.15 | -3.8 | 18.8 |
| | R | 0.17 | 0.4 | 0.3 | 0.04 | 0.002 | | 13.4 | 1.3 | 0.06 | | 0.05 | 0.05 | 0.05 | | Cu:1.8 | 0.15 | -0.1 | 18.7 |
| | S | 0.23 | 0.3 | 0.3 | 0.04 | 0.003 | | 13.4 | 2.0 | 0.08 | 0.10 | 0.15 | | | | W:2.8 | 0.25 | -1.2 | 21.3 |
| | T | 0.22 | 0.3 | 0.2 | 0.02 | 0.003 | 0.2 | 12.8 | 2.1 | 0.08 | | 0.12 | 0.05 | 0.05 | | Co:1.8 | 0.22 | -1.6 | 21.0 |
| | U | 0.21 | 0.2 | 0.2 | 0.03 | 0.003 | | 13.0 | 1.8 | 0.08 | | 0.03 | | | | B:0.008 | 0.03 | -1.4 | 20.2 |
| | V | 0.20 | 0.4 | 0.3 | 0.02 | 0.002 | 0.2 | 13.1 | 1.8 | 0.07 | | 0.14 | 0.03 | | | Sn:0.27 | 0.17 | -1.0 | 20.2 |
| | W | 0.21 | 0.2 | 0.3 | 0.03 | 0.003 | 0.1 | 13.1 | 1.7 | 0.07 | | | 0.05 | | | Sb:0.27 | 0.05 | -1.3 | 19.8 |
| | X | 0.20 | 0.4 | 0.5 | 0.03 | 0.001 | 0.2 | 12.9 | 1.5 | 0.07 | 0.03 | | 0.05 | 0.05 | 0.02 | Ca:0.005 | 0.13 | -1.5 | 19.0 |
| | Y | 0.22 | 0.3 | 0.3 | 0.02 | 0.001 | 0.1 | 12.7 | 1.4 | 0.09 | | 0.20 | | 0.05 | 0.09 | Mg:0.004 | 0.25 | -2.4 | 18.8 |
| | Z | 0.20 | 0.3 | 0.4 | 0.02 | 0.001 | 0.2 | 12.8 | 1.5 | 0.08 | 0.05 | 0.20 | | | 0.02 | Hf:0.008 | 0.25 | -1.8 | 19.0 |
| | AA | 0.21 | 0.3 | 0.3 | 0.02 | 0.001 | | 12.9 | 2.1 | 0.08 | | 0.15 | 0.05 | | 0.03 | REM:0.04 | 0.2 | -1.0 | 21.1 |

## Table 2

| Section | Steel | Chemical Composition (mass%) | | | | | | | | | | | | | | | | DI | PREN |
|---|---|---|---|---|---|---|---|---|---|---|---|---|---|---|---|---|---|---|---|
| | | C | Si | Mn | P | S | Ni | Cr | Mo | N | Nb | V | Ti | Ta | Al | Others | Nb+V+Ti+Ta | | |
| Comparative Steels | AB | 0.09 | 0.2 | 0.4 | 0.02 | 0.002 | 0.2 | 12.8 | 1.3 | 0.12 | | 0.10 | | | | | 0.10 | -0.2 | 19.0 |
| | AC | 0.31 | 0.4 | 0.3 | 0.03 | 0.002 | | 13.0 | 1.6 | 0.04 | | | 0.05 | | 0.02 | | 0.05 | -3.2 | 18.9 |
| | AD | 0.21 | 0.05 | 0.4 | 0.03 | 0.003 | | 13.1 | 1.5 | 0.08 | 0.05 | | 0.02 | | | | 0.07 | -1.7 | 19.3 |
| | AE | 0.18 | 2.2 | 0.4 | 0.03 | 0.002 | 0.1 | 12.9 | 1.6 | 0.08 | | 0.20 | 0.03 | | | | 0.23 | -0.1 | 19.5 |
| | AF | 0.19 | 0.3 | 0.05 | 0.03 | 0.005 | | 12.8 | 2.0 | 0.07 | | | 0.20 | | | | 0.20 | -0.6 | 20.5 |
| | AG | 0.19 | 0.3 | 3.2 | 0.02 | 0.002 | 0.3 | 13.1 | 1.8 | 0.08 | | 0.10 | | | | | 0.10 | -1.4 | 20.3 |
| | AH | 0.20 | 0.4 | 0.3 | 0.06 | 0.002 | | 13.1 | 1.8 | 0.09 | | 0.10 | 0.05 | | 0.03 | | 0.15 | -1.0 | 20.5 |
| | AI | 0.21 | 0.4 | 0.5 | 0.02 | 0.012 | 0.4 | 12.8 | 1.7 | 0.08 | | | | | | | 0.05 | -1.6 | 19.7 |
| | AJ | 0.21 | 0.3 | 0.4 | 0.02 | 0.002 | 2.1 | 12.7 | 1.6 | 0.09 | | 0.20 | | 0.05 | | | 0.20 | -4.2 | 19.4 |
| | AK | 0.18 | 0.3 | 0.3 | 0.02 | 0.002 | 0.5 | 11.8 | 1.6 | 0.07 | 0.02 | 0.05 | | | | | 0.07 | -1.9 | 18.2 |
| | AL | 0.18 | 0.2 | 0.5 | 0.02 | 0.004 | 0.5 | 16.2 | 1.0 | 0.07 | 0.05 | 0.05 | | | 0.03 | | 0.10 | 1.3 | 20.6 |
| | AM | 0.17 | 0.4 | 0.6 | 0.03 | 0.003 | 0.5 | 13.1 | 0.8 | 0.05 | 0.07 | 0.08 | | | | | 0.15 | -1.4 | 16.5 |
| | AN | 0.21 | 0.5 | 0.3 | 0.02 | 0.002 | | 12.1 | 3.2 | 0.08 | | 0.08 | | 0.05 | | | 0.13 | -0.4 | 23.9 |
| | AO | 0.16 | 0.1 | 0.2 | 0.02 | 0.004 | 0.5 | 12.3 | 1.7 | 0.005 | | 0.03 | 0.05 | | | | 0.08 | -0.1 | 18.0 |
| | AP | 0.17 | 0.4 | 0.6 | 0.04 | 0.002 | | 12.5 | 1.7 | 0.16 | | 0.03 | 0.04 | | | | 0.07 | -2.4 | 20.7 |
| | AQ | 0.23 | 0.3 | 0.6 | 0.03 | 0.002 | 0.7 | 12.6 | 1.8 | 0.06 | 0.32 | | | | | | 0.32 | -2.6 | 19.5 |
| | AR | 0.22 | 0.5 | 0.3 | 0.02 | 0.003 | | 13.1 | 1.9 | 0.08 | | 0.33 | | | | | 0.33 | -1.3 | 20.7 |

Table 3

| Section | Steel | Chemical Composition (mass%) | | | | | | | | | | | | | | Nb+V +Ti+Ta | DI | PREN |
|---|---|---|---|---|---|---|---|---|---|---|---|---|---|---|---|---|---|---|
| | | C | Si | Mn | P | S | Ni | Cr | Mo | N | Nb | V | Ti | Ta | Al | Others | | | |
| Comparatives | AS | 0.18 | 0.4 | 0.2 | 0.02 | 0.002 | | 13.1 | 1.8 | 0.08 | | | 0.33 | | | | 0.33 | -0.4 | 20.3 |
| | AT | 0.17 | 0.4 | 0.3 | 0.02 | 0.003 | | 13.0 | 1.7 | 0.08 | | | | 0.32 | | | 0.32 | -0.4 | 19.9 |
| | AU | 0.21 | 0.3 | 0.5 | 0.04 | 0.002 | 0.3 | 12.3 | 1.4 | 0.09 | 0.02 | | 0.05 | | 1.1 | | 0.07 | -0.3 | 18.4 |
| | AV | 0.19 | 0.3 | 0.4 | 0.04 | 0.002 | | 13.2 | 1.8 | 0.08 | 0.03 | | | | | Cu:2.2 | 0.03 | -0.6 | 20.4 |
| | AW | 0.18 | 0.3 | 0.5 | 0.02 | 0.004 | | 13.2 | 1.6 | 0.07 | | 0.10 | 0.03 | | | W:3.2 | 0.13 | -0.5 | 19.6 |
| | AX | 0.20 | 0.4 | 0.3 | 0.03 | 0.004 | | 13.3 | 1.6 | 0.08 | 0.05 | | | | | Co:2.2 | 0.05 | -1.0 | 19.9 |
| | AY | 0.20 | 0.3 | 0.4 | 0.02 | 0.002 | | 13.0 | 1.5 | 0.08 | | 0.20 | | | | B:0.012 | 0.20 | -1.5 | 19.2 |
| | BA | 0.21 | 0.3 | 0.4 | 0.03 | 0.003 | | 12.9 | 1.6 | 0.07 | 0.05 | | | | | Sn:0.33 | 0.05 | -1.5 | 19.3 |
| | BB | 0.18 | 0.3 | 0.4 | 0.01 | 0.003 | | 12.7 | 1.8 | 0.08 | 0.05 | | | | | Sb:0.32 | 0.05 | -0.9 | 19.9 |
| | BC | 0.17 | 0.3 | 0.4 | 0.02 | 0.002 | | 13.1 | 2.1 | 0.09 | | 0.10 | | | | Ca:0.007 | 0.10 | -0.1 | 21.5 |
| | BD | 0.19 | 0.4 | 0.3 | 0.03 | 0.002 | | 13.1 | 2.2 | 0.08 | | | 0.03 | | | Mg0.007 | 0.03 | -0.2 | 21.6 |
| | BE | 0.22 | 0.4 | 0.3 | 0.02 | 0.004 | | 13.0 | 1.6 | 0.08 | | 0.05 | 0.02 | | | Hf:0.012 | 0.07 | -1.8 | 19.6 |
| | BF | 0.22 | 0.3 | 0.2 | 0.04 | 0.003 | | 12.7 | 1.5 | 0.09 | | 0.06 | 0.03 | | | REM:0.08 | 0.09 | -2.4 | 19.1 |
| | BG | 0.18 | 0.3 | 0.3 | 0.02 | 0.002 | | 13.1 | 1.8 | 0.07 | 0.01 | 0.01 | | | | | 0.02 | -0.3 | 20.2 |
| | BH | 0.18 | 0.3 | 0.3 | 0.02 | 0.003 | | 13.2 | 1.6 | 0.08 | 0.20 | 0.20 | | | | | 0.4 | -0.6 | 19.8 |
| | BI | 0.18 | 0.4 | 0.4 | 0.02 | 0.002 | | 13.1 | 2.1 | 0.06 | | | 0.03 | 0.02 | | | 0.05 | 0.3 | 21.0 |
| | BJ | 0.19 | 0.4 | 0.4 | 0.02 | 0.002 | | 12.4 | 1.2 | 0.07 | | | 0.03 | 0.03 | | | 0.06 | -1.9 | 17.5 |

The steel wires were then formed into self-drilling tapping screws 2 each with a hexagonal head shape as illustrated in Fig. 1 by usual methods including a cold double header (with oil lubrication), descaling, tip forming, and thread rolling. Subsequently, the self-drilling tapping screws were prototyped by performing vacuum quenching at 1,100 degrees C, tempering at 250 degrees C, barrel polishing, and immersion in 15% nitric acid solution for 30 minutes.

The evaluation was conducted on the Mo segregation ratio at the central portion of the transverse cross section of each of the wire rods and steel wires, cold workability, corrosion resistance of the head of each of the self-drilling tapping screws, hardness, toughness of the head, and microstructure. Results are shown in Tables 4 to 6.

The Mo segregation ratio in the central portion of the transverse cross section of each of the wire rods and steel wires was calculated as a mass ratio (maximum segregation amount/average composition) of the maximum segregation amount, as which the Mo content in the Mo largest portion near the central portion of the transverse cross section was defined, to the average Mo composition obtained from chemical analysis of the wire rods and steel wires. The Mo content in the Mo largest portion was obtained by embedding and polishing the transverse cross section of the wire rod and steel wire as an inspection surface, followed by line analysis in a radial direction using EPMA to measure the Mo distribution.

Cold workability was evaluated by presence or absence of head cracking during cold forging of 100 self-drilling tapping screw heads using a cold double header. The cold workability was evaluated as X (failure) when cracking was observed in 10 or more screw heads, and as A (pass) when cracking was observed in less than 10 screw heads.

To evaluate corrosion resistance of the heads of the self-drilling tapping screws, 10 self-drilling tapping screws were subjected to a 240-hour JIS salt spray test, and the corrosion resistance was evaluated as X (failure) when two or more screw heads were rusted, and as A (pass) when less than two screw heads was rusted.

For hardness of the screw products, the tip of each of the self-drilling tapping screws was embedded and polished, and hardness at a central portion of the tip was measured with Vickers hardness at a load of 1 kgf. The hardness was evaluated as A (pass) at $Hv \geq 500$ and as X (failure) at $Hv < 500$.

To evaluate toughness of each screw head, the self-drilling tapping screw was inserted into a jig whose seat face was inclined at a 10-degree angle to the screw and the head was struck with a hammer until the seat face of the head was brought into contact with the jig, and the toughness was evaluated by whether head breakage occurred or cracking occurred at a rounded portion under a neck. The toughness was evaluated as X (failure) when head breakage or cracking was observed, and as A (pass) when head breakage or cracking was not observed.

A longitudinal cross-section of each prototype screw was embedded and polished as an inspection surface. After etching with aqua regia, the microstructure of the screw was evaluated as X (failure) when $\delta$-ferrite was present (at 1 vol.% or more) throughout, including near a surface layer, and as A (pass) when $\delta$-ferrite was not present.

## Table 4

| Section | No. | Steel | Mo segregation ratio in central portion of wire rod | Mo segregation ratio in central portion of steel wire | Cold workability | Corrosion resistance of screw product | Hardness of screw product (Hv) | Toughness of screw head | Microstructure of screw product | Remarks |
|---|---|---|---|---|---|---|---|---|---|---|
| Inventive Examples | 1 | A | 1.4 | 1.4 | A | A | 630 | A | A | |
| | 2 | B | 0.9 | 1.0 | A | A | 530 | A | A | |
| | 3 | C | 1.1 | 1.0 | A | A | 680 | A | A | |
| | 4 | D | 1.1 | 1.2 | A | A | 650 | A | A | |
| | 5 | E | 1.0 | 1.1 | A | A | 580 | A | A | |
| | 6 | F | 1.0 | 1.0 | A | A | 580 | A | A | |
| | 7 | G | 0.9 | 0.9 | A | A | 600 | A | A | |
| | 8 | H | 1.2 | 1.2 | A | A | 580 | A | A | |
| | 9 | I | 0.7 | 0.8 | A | A | 620 | A | A | |
| | 10 | J | 1.8 | 1.7 | A | A | 600 | A | A | |
| | 11 | K | 0.8 | 0.7 | A | A | 570 | A | A | |
| | 12 | L | 1.0 | 1.0 | A | A | 610 | A | A | |
| | 13 | M | 1.1 | 1.1 | A | A | 580 | A | A | |
| | 14 | N | 0.8 | 0.9 | A | A | 600 | A | A | |
| | 15 | O | 1.0 | 1.1 | A | A | 600 | A | A | |
| | 16 | P | 1.1 | 1.0 | A | A | 600 | A | A | |
| | 17 | Q | 0.9 | 0.8 | A | A | 610 | A | A | |
| | 18 | R | 0.9 | 0.9 | A | A | 530 | A | A | |
| | 19 | S | 1.3 | 1.3 | A | A | 620 | A | A | |
| | 20 | T | 1.6 | 1.6 | A | A | 600 | A | A | |
| | 21 | U | 1.3 | 1.3 | A | A | 590 | A | A | |
| | 22 | V | 1.3 | 1.2 | A | A | 580 | A | A | |
| | 23 | W | 1.2 | 1.1 | A | A | 580 | A | A | |
| | 24 | X | 1.1 | 1.1 | A | A | 580 | A | A | |
| | 25 | Y | 0.9 | 0.9 | A | A | 600 | A | A | |
| | 26 | Z | 1.5 | 1.4 | A | A | 600 | A | A | |
| | 27 | AA | 0.9 | 0.9 | A | A | 600 | A | A | |

## Table 5

| Section | No. | Steel | Mo segregation ratio in central portion of wire rod | Mo segregation ratio in central portion of steel wire | Cold workability | Corrosion resistance of screw product | Hardness of screw product (Hv) | Toughness of screw head | Microstructure of screw product | Remarks |
|---|---|---|---|---|---|---|---|---|---|---|
| Comparatives | 1 | AB | 1.0 | 0.9 | A | A | <u>480</u> | A | A | |
| | 2 | AC | 1.1 | 1.1 | X | X | 700 | X | A | |
| | 3 | AD | 1.0 | 0.9 | X | A | 600 | X | A | poor deoxidation |
| | 4 | AE | 1.2 | 1.2 | X | A | 570 | X | A | |
| | 5 | AF | 1.3 | 1.3 | X | X | 560 | X | A | frequent occurrence of rolling defects |
| | 6 | AG | 1.2 | 1.2 | X | A | 570 | A | A | |
| | 7 | AH | 1.2 | 1.2 | A | A | 590 | X | A | |
| | 8 | AI | 1.1 | 1.1 | X | X | 600 | X | A | |
| | 9 | AJ | 1.2 | 1.2 | X | A | 600 | A | A | |
| | 10 | AK | 1.1 | 1.1 | A | X | 550 | A | A | |
| | 11 | AL | 0.7 | 0.7 | A | X | <u>480</u> | A | X | |
| | 12 | AM | 0.5 | 0.4 | A | X | 520 | A | A | |
| | 13 | AN | <u>2.2</u> | <u>2.2</u> | A | X | 600 | X | A | |
| | 14 | AO | 1.1 | 1.2 | A | A | <u>480</u> | A | A | |
| | 15 | AP | 1.1 | 1.1 | X | X | 600 | X | A | occurrence of blow holes |
| | 16 | AQ | 1.2 | 1.3 | X | A | 620 | X | A | |
| | 17 | AR | 1.3 | 1.2 | X | A | 610 | X | A | |

Table 6

| Section | No. | Steel | Mo segregation ratio in central portion of wire rod | Mo segregation ratio in central portion of steel wire | Cold workability | Corrosion resistance of screw product | Hardness of screw product (Hv) | Toughness of screw head | Microstructure of screw product | Remarks |
|---|---|---|---|---|---|---|---|---|---|---|
| Comparatives | 18 | AS | 1.2 | 1.1 | X | A | 560 | X | A | |
| | 19 | AT | 1.1 | 1.2 | X | A | 550 | X | A | |
| | 20 | AU | 0.9 | 0.9 | X | A | 600 | X | A | |
| | 21 | AV | 1.2 | 1.2 | X | A | 580 | X | A | |
| | 22 | AW | 1.1 | 1.1 | X | A | 550 | X | A | |
| | 23 | AX | 1.1 | 1.0 | X | A | 580 | A | A | |
| | 24 | AY | 1.0 | 1.1 | A | A | 580 | X | A | |
| | 25 | BA | 1.1 | 1.2 | X | A | 590 | X | A | |
| | 26 | BB | 1.2 | 1.1 | X | A | 560 | X | A | |
| | 27 | BC | 1.4 | 1.5 | X | A | 550 | X | A | |
| | 28 | BD | 1.5 | 1.5 | X | A | 570 | X | A | |
| | 29 | BE | 1.1 | 1.1 | X | A | 610 | X | A | |
| | 30 | BF | 1.0 | 1.1 | X | A | 620 | X | A | |
| | 31 | BG | 1.2 | 1.2 | A | X | 550 | A | A | |
| | 32 | BH | 1.1 | 1.2 | X | A | 560 | X | A | |
| | 33 | BI | 1.3 | 1.4 | A | X | 540 | A | A | |
| | 34 | BJ | 0.8 | 0.8 | A | X | 570 | A | A | |

As shown in Tables 1 to 3 and Tables 4 to 6, superiority of the inventive composition is evident.

Example 2

To investigate the effects of the cross-section areas of the cast steels during casting, indirect water cooling, and reduction of area during hot rolling, steels A and J with the chemical compositions shown in Table 1 were melted at approximately 1,600 degrees C using a 150-kg vacuum melting furnace. The molten steels were then cast into magnesia-based molds of various sizes, with and without indirect water cooling. A case where water-cooling pipes are installed around the outer periphery of the mold is defined to be with indirect water cooling. A case where water-cooling pipes are not installed is defined to be without indirect cooling. As shown in Table 7, the solidification cooling rate in the central portion of the cast steel during casting was varied by changing a size of the average cross-section area (transverse cross-section area X) of the cylindrical mold in a range from 50 to 400 cm$^2$. The cooling rate in the central portion of the cast steel during solidification was estimated based on a cooling rate (R, at degrees C/s) calculated using an equation $\lambda = 82 \times R^{-0.3}$, where a secondary dendrite arm spacing ($\lambda$, in $\mu$m) was measured in the central portion of the cross section of the cast steels of SUS304 samples cast under the same melting and solidification conditions.

After casting, as shown in Table 7, the cast steels were heated to 1,150 degrees C and hot rolled to prototype wire rods each having a diameter ranging from 6.0 mm to 13.0 mm. The wire rods were further subjected to full annealing at 880 degrees C, pickling, and cold drawing in a combination, thereby prototyping steel wires each having a diameter of 6.0 mm. In the subsequent procedure, the steel wires and self-drilling tapping screws were prototyped using the same procedures as in Example 1. For the wire rods each having a diameter of 6.0 mm, cold drawing was performed as a skin pass (reduction of area: 1%).

Table 7

| Section | No. | Steel | Average cross-section area X of cast steel (cm²) | cooling rate during solidification (°C/s) | Presence or absence of indirect water cooling | Wire rod diameter (mm) | Reduction of area in hot rolling (%) | Y value (%) | Mo segregation ratio at central portion of wire rod | Mo segregation ratio at central portion of steel wire | Cold workability | Corrosion resistance of screw product | Hardness of screw product (Hv) | Toughness of screw head | Microstructure of screw product | Remarks |
|---|---|---|---|---|---|---|---|---|---|---|---|---|---|---|---|---|
| Comparatives | 35 | A | 70 | 7 | presence | 6 | 99.2 | 98.9 | 2.2 | 2.2 | A | X | 620 | A | A | small cross-section area of cast steel |
| Comparatives | 36 | | 100 | 4 | presence | 10 | 98.4 | 99.0 | 2.1 | 2.1 | A | X | 610 | A | A | small reduction of area in rolling |
| Comparatives | 37 | | 150 | 2 | presence | 12 | 98.5 | 99.1 | 2.5 | 2.4 | A | X | 615 | A | A | small reduction of area in rolling |
| Inventive Examples | 28 | | 100 | 4 | presence | 7 | 99.2 | 99.0 | 1.4 | 1.8 | A | A | 620 | A | A | |
| Inventive Examples | 1 | | 200 | 1 | presence | 6 | 99.7 | 99.3 | 1.4 | 1.4 | A | A | 630 | A | A | |
| Inventive Examples | 29 | | 350 | 0.2 | presence | 6 | 99.8 | 99.6 | 1.9 | 1.8 | A | A | 630 | A | A | |
| Comparatives | 38 | | 200 | 0.1 | absence | 6 | 99.7 | 99.3 | 2.1 | 2.2 | A | X | 620 | A | A | no cooling of cast steel |
| Comparatives | 39 | | 400 | 0.1 | presence | 6 | 99.9 | 99.8 | 2.4 | 2.3 | A | X | 620 | A | A | large cross-section area of cast steel |
| Comparatives | 40 | | 400 | 0.1 | presence | 8 | 99.7 | 99.8 | 2.7 | 2.6 | A | X | 625 | A | A | large cross-section area of cast steel; small reduction of area in rolling |
| Comparatives | 41 | J | 70 | 7 | presence | 6 | 99.2 | 98.9 | 2.2 | 2.2 | A | X | 590 | A | A | small cross-section area of cast steel |
| Comparatives | 42 | | 100 | 4 | presence | 13 | 97.3 | 99.0 | 2.1 | 2.1 | A | X | 590 | A | A | small reduction of area in rolling |
| Comparatives | 43 | | 150 | 2 | presence | 12 | 98.5 | 99.1 | 2.4 | 2.3 | A | X | 590 | A | A | small reduction of area in rolling |
| Inventive Examples | 30 | | 100 | 4 | presence | 7 | 99.2 | 99.0 | 1.4 | 1.9 | A | A | 600 | A | A | |
| Inventive Examples | 10 | | 200 | 1 | presence | 6 | 99.7 | 99.3 | 1.8 | 1.7 | A | A | 600 | A | A | |
| Inventive Examples | 31 | | 350 | 0.2 | presence | 7 | 99.8 | 99.6 | 1.8 | 1.9 | A | A | 610 | A | A | |
| Comparatives | 44 | | 200 | 0.1 | absence | 6 | 99.7 | 99.3 | 2.1 | 2.1 | A | X | 605 | A | A | no cooling of cast steel |
| Comparatives | 45 | | 400 | 0.1 | presence | 7 | 99.8 | 99.8 | 2.5 | 2.4 | A | X | 600 | A | A | large cross-section area of cast steel |
| Comparatives | 46 | | 400 | 0.1 | presence | 10 | 99.6 | 99.8 | 2.6 | 2.5 | A | X | 590 | A | A | large cross-section area of cast steel; small reduction of area in rolling |

After prototyping, the evaluation was conducted using the same procedures as in Example 1 on the Mo segregation ratio at the central portion of each of the wire rods and steel wires, cold workability, corrosion resistance of the head of each of the self-drilling tapping screws, hardness, toughness of the head, and microstructure. Results are shown in Table 7.

As shown in Table 7, it is evident that the self-drilling tapping screws, which were manufactured using the wire rods or steel wires manufactured by applying the casting condition and the hot rolling condition of the cast steel of the invention, have superiority in quality.

Example 3

Next, for the steel A shown in Table 1, continuous casting was performed in the typical stainless steel manufacturing process with a mold size of a 195-mm diameter and a 300-cm$^2$ cross section area after refining, and the degree of influence of absence or presence of indirect water cooling in the mold during casting and direct water cooling of the surface layer of the cast steel drawn from the mold immediately after casting was investigated. The Inventive Example 32 in Table 8 was subjected to both the indirect water cooling in the mold and the direct water cooling of the surface layer of the cast steel immediately afterwards. The Inventive Example 33 was subjected to the indirect water cooling in the mold, but no direct water cooling of the surface layer of the cast steel immediately afterwards. The Comparative 47 was subjected to neither the indirect water cooling in the mold nor the direct water cooling of the surface layer of the cast steel immediately afterwards. After casting, self-drilling tapping screws were prototyped from the steel wires under the conditions shown in Table 8 and the same conditions as in Example 2.

After prototyping, the evaluation was conducted using the same procedures as in Example 1 on the Mo segregation ratio at the central portion of the transverse cross section of each of the wire rods and steel wires, cold workability, corrosion resistance of the head of each of the self-drilling tapping screws, hardness, toughness of the head, and microstructure. Results are shown in Table 8.

# Table 8

| Section | Steel No. | Steel | Average cross-section area X of cast steel (cm²) | cooling rate during solidification (°C/s) | Presence or absence of indirect water cooling | Presence or absence of direct water cooling | Wire rod diameter (mm) | Reduction of area in hot rolling (%) | Y value (%) | Mo segregation ratio in central portion of wire rod | Mo segregation ratio in central portion of steel wire | Cold workability | Corrosion resistance of screw product | Hardness of screw product (Hv) | Toughness of screw head | Microstructure of screw product | Remarks |
|---|---|---|---|---|---|---|---|---|---|---|---|---|---|---|---|---|---|
| Inventive Examples | 32 | A | 300 | 1 | presence | presence | 8 | 99.7 | 99.5 | 1.3 | 1.2 | A | A | 620 | A | A | |
| Inventive Examples | 33 | A | 300 | 0.3 | presence | absence | 8 | 99.7 | 99.5 | 1.8 | 1.9 | A | A | 615 | A | A | no direct water cooling |
| Comp. | 47 | A | 300 | 0.1 | absence | absence | 8 | 99.7 | 99.5 | 2.1 | 2.1 | A | X | 610 | A | A | no water cooling during solidification |

As shown in Table 8, by applying indirect water cooling and direct water cooling conditions during the solidification of the cast steel according to the invention, a wire rod or steel wire in which central segregation of Mo is suppressed is manufactured. A self-drilling tapping screw manufactured using the resulting wire rod or steel wire exhibits a clear superiority in quality.

INDUSTRIAL APPLICABILITY

As is clear from the above Examples, the invention is industrially extremely useful because the invention can stably provide a wire rod or steel wire for high hardness stainless steel components with improved corrosion resistance in the central portion of the product, including the central portion of high corrosion resistant and high hardness components. In particular, the invention is directed to a martensitic stainless steel.

EXPLANATION OF CODES

1. wire rod or steel wire,
2. self-drilling tapping screw,
11. positive Mo segregation region in a central portion,
12. rust formation site in a central portion of a screw head,
13. processing and heating treatment.

**Claims**

1.  A stainless steel wire rod or steel wire comprising: by mass%,

    C: from 0.10 to 0.30%;
    Si: from 0.10 to 2.0%;
    Mn: from 0.10 to 3.0%;
    P: 0.05% or less;
    S: 0.010% or less;
    Cr: from 12.0 to 16.0%;
    Mo: from 1.0 to 3.0%;
    N: from 0.010 to 0.15%;
    one or more of Nb: 0.30% or less, V: 0.30% or less, Ti: 0.30% or less, and Ta: 0.30% or less in an amount of Nb+V+Ti+Ta being in a range from 0.03 to 0.30%; and
    a balance consisting of Fe and impurities, wherein
    the stainless steel wire rod or steel wire has a composition adjusted so that a DI value represented by an equation (1) is 0% or less and PREN represented by an equation (2) is 18.0% or more, and
    a mass ratio of (maximum segregation amount/average composition) of Mo in a central portion of a transverse cross section of the stainless steel wire rod or steel wire is 2.0 or less,

$$DI = Cr + 1.21Mo + 0.48Si + 2.48Al - (24.5C + 18.4N + Ni + 0.11Mn) - 10 \quad .... \text{ Equation (1)}$$

$$PREN = Cr + 3.3Mo + 16N \quad .... \text{ Equation (2)}$$

    where in the equations (1) and (2), each of element symbols represents a content of a corresponding element by mass%.

2.  The stainless steel wire rod or steel wire according to claim 1, wherein

    in place of a part of the Fe, the stainless steel wire rod or steel wire comprises one or both of a group (A) and a group (B) below,
    the group (A):

one or more of Ni: 2.0% or less, Cu: 2.0% or less, W: 3.0% or less, Co: 2.0% or less, B: 0.010% or less, Sn: 0.30% or less, Sb: 0.30% or less, and Al: 1.00% or less, and
the group (B):
one or more of Ca: 0.006% or less, Mg: 0.006% or less, Hf: 0.010% or less, and REM: 0.06% or less.

3. A manufacturing method of a stainless steel wire rod or steel wire according to claim 1 or 2, comprising:

casting a cast steel having the composition according to claim 1 or 2 with a small transverse cross-section area X ($cm^2$) of 80 to 350 $cm^2$ by indirect cooling in a mold, or by indirect cooling in the mold and rapid cooling of a surface layer of the cast steel by direct water cooling, and
subsequently, hot rolling the cast steel at a reduction of area equal to or more than Y (%) represented by an equation (3),

$$Y = 0.0025X + 98.75 \quad ..... \text{ Equation (3).}$$

4. A self-drilling tapping screw exhibiting an excellent corrosion resistance in a central portion of a head, and manufactured using the stainless steel wire rod or steel wire according to claim 1 or 2 as a raw material.

# F I G . 1

1

11

13

2

12

## INTERNATIONAL SEARCH REPORT

| International application No. |
|---|
| **PCT/JP2024/032281** |

### A. CLASSIFICATION OF SUBJECT MATTER

*C22C 38/00*(2006.01)i; *B22D 11/00*(2006.01)i; *C21D 8/06*(2006.01)i; *C21D 9/00*(2006.01)i; *C22C 38/58*(2006.01)i; *C22C 38/60*(2006.01)i
FI:   C22C38/00 302Z; C22C38/58; C22C38/60; C21D8/06 B; C21D9/00 A; B22D11/00 B

According to International Patent Classification (IPC) or to both national classification and IPC

### B. FIELDS SEARCHED

Minimum documentation searched (classification system followed by classification symbols)

C22C38/00-C22C38/60; B22D11/00; C21D8/06; C21D9/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 7-316742 A (NIPPON STEEL CORPORATION) 05 December 1995 (1995-12-05) entire text | 1-4 |
| A | JP 2003-41348 A (SANYO SPECIAL STEEL CO., LTD.) 13 February 2003 (2003-02-13) entire text | 1-4 |
| A | JP 2021-17626 A (DAIDO STEEL CO., LTD.) 15 February 2021 (2021-02-15) entire text | 1-4 |
| A | CN 117535586 A (SHANXI TAIGANG STAINLESS STEEL CO., LTD.) 09 February 2024 (2024-02-09) entire text, all drawings | 1-4 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **14 November 2024** | **03 December 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/032281**

| Patent document cited in search report | | | Publication date (day/month/year) | Patent family member(s) | Publication date (day/month/year) |
|---|---|---|---|---|---|
| JP | 7-316742 | A | 05 December 1995 | (Family: none) | |
| JP | 2003-41348 | A | 13 February 2003 | (Family: none) | |
| JP | 2021-17626 | A | 15 February 2021 | (Family: none) | |
| CN | 117535586 | A | 09 February 2024 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3340225 B
- JP 4252145 B

- JP H4305350 A